Europäisches Patentamt

European Patent Office

Office européen des brevets

(19)

(11) **EP 0 567 364 B1**

(12) **FASCICULE DE BREVET EUROPEEN**

(45) Date de publication et mention
de la délivrance du brevet:
**29.08.2001 Bulletin 2001/35**

(51) Int Cl.⁷: **G06K 11/16**

(21) Numéro de dépôt: **93400897.0**

(22) Date de dépôt: **06.04.1993**

(54) **Procédé d'exploitation d'un clavier tactile capacitif**

Verfahren zum Betrieb einer kapazitiven Tastatur mit Druckpunktauslösung

Process for operating a capacitive tactile keyboard

(84) Etats contractants désignés:
**DE GB IT NL**

(30) Priorité: **24.04.1992 FR 9205088**

(43) Date de publication de la demande:
**27.10.1993 Bulletin 1993/43**

(73) Titulaire: **THOMSON-CSF SEXTANT**
**78141 Vélizy Villacoublay (FR)**

(72) Inventeurs:
 • **Jahier, Isabelle**
 **F-75015 Paris (FR)**
 • **Robert, Patrick**
 **F-78500 Sartrouville (FR)**

(74) Mandataire: **Geismar, Thierry et al**
 **Bouju Derambure Bugnion,**
 **52, rue de Monceau**
 **75008 Paris (FR)**

(56) Documents cités:
 **FR-A- 2 662 528**    **GB-A- 2 138 567**
 **US-A- 4 441 097**    **US-A- 4 550 221**

 • **PATENT ABSTRACTS OF JAPAN vol. 8, no. 27**
 **(P-252)(1464) 4 Février 1984**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne un procédé d'exploitation d'un clavier tactile capacitif et plus particulièrement un tel procédé dans lequel on détermine cycliquement la position du doigt de l'opérateur sur le clavier et la pression exercée par ce doigt, par des mesures de capacité et des mesures d'effort.

De tels claviers décrits par exemple dans le PATENT ABSTRACTS OF JAPAN, vol. 8, no. 27 (p-252), 04/02/1084 JP 58-182 746 sont constitués d'une surface tactile capacitive disposée devant un afficheur, par exemple, à cristaux liquides, et permettent de désigner du doigt une zone affichée particulière. A cet effet, on détermine par des mesures de capacité la position du doigt sur la surface et on détecte grâce à un dispositif de mesure d'effort, constitué par exemple de jauges de contraintes, une pression du doigt exercée sur la surface.

Le procédé selon l'invention a pour but de permettre d'exploiter les signaux issus de la surface tactile capacitive et du dispositif de mesure d'effort.

Il a également pour but de fournir un clavier entièrement paramètrable pour répondre aux exigences de l'application opérationnelle et aux contraintes liées à l'environnement.

Il a également pour but de permettre un réglage de la sensibilité du clavier et une compensation des dérives et perturbations.

A cet effet, l'invention a pour objet un dispositif d'exploitation d'un clavier tactile capacitif dans lequel on détermine cycliquement la position du doigt de l'opérateur sur le clavier et la pression exercée par ce doigt par des mesures de capacité et des mesures d'efforts caractérisé par le fait que :

- dans une première phase de chaque cycle on mesure la valeur capacitive de chaque touche du clavier et on détermine à partir de ces mesures un état de sélection du clavier,

- dans une deuxième phase du cycle, et pour seulement certains états de sélection du clavier, on prend en compte les mesures d'effort pour déterminer un état de validation du clavier, et

- on décide qu'une sélection valide a eu lieu en fonction de l'état de sélection et de l'état de validation du clavier.

La mise en oeuvre du procédé selon l'invention repose donc sur deux automates fonctionnant en maître/esclave et une logique de décodage.

Le premier automate est associé au dispositif de mesure capacitive. Ses paramètres d'entrée sont de type analogique et sont constitués par les valeurs capacitives mesurées à chaque cycle pour chaque touche du clavier, et ses paramètres de sortie sont constitués d'un entier positif caractérisant la touche sélectionnée et d'un paramètre logique définissant l'état de cette touche.

Le second automate est associé au dispositif de mesure d'effort. Son paramètre d'entrée est également de type analogique et constitué de la valeur d'effort mesurée à chaque cycle, et son paramètre de sortie est le paramètre logique définissant l'état de validation.

Les deux paramètres logiques de sélection et de validation sont appliqués en entrée de la logique de décodage qui fournit en sortie un paramètre logique de sélection valide.

Afin de compenser les dérives et perturbations dues à l'environnement on peut prévoir de comparer les valeurs capacitives et les valeurs d'effort mesurées à des valeurs de référence et, lorsque tous les écarts capacitifs mesurés sont inférieurs à un seuil bas prédéterminé, de mettre à jour les valeurs de référence.

On considère par conséquent que, aussi longtemps que les écarts capacitifs mesurés sont inférieurs au seuil bas, le clavier est au repos et que les écarts aussi bien des valeurs capacitives que des valeurs d'effort sont dus à des dérives ou des perturbations. On modifie alors dans ce cas les valeurs référence. En revanche, dès lors qu'un écart capacitif mesuré est supérieur ou égal au seuil bas précité, on considère que cet écart est du à une action sur le clavier et l'on cesse de mettre à jour la valeur capacitive de référence correspondante ainsi que la valeur d'effort de référence.

Dans un mode de mise en oeuvre particulier du procédé de l'invention, les valeurs capacitives de référence mises à jour sont obtenues par calcul d'une moyenne pondérée à partir d'au moins la moyenne précédemment calculée et de la valeur capacitive mesurée, et la valeur d'effort de référence mise à jour est la dernière valeur d'effort mesurée.

Les valeurs capacitives de référence mises à jour étant obtenues par calcul d'une moyenne pondérée à partir d'au moins la moyenne précédemment calculée et de la valeur capacitive mesurée dépendent donc non seulement des valeurs capacitives courantes mesurées mais également des valeurs capacitives mesurées au moins au cycle précédent. Le poids donné aux valeurs capacitives courantes dans le calcul des valeurs capacitives de référence permet de régler la sensibilité aux dérives et perturbations, notamment d'origines électriques.

En revanche, la valeur d'effort de référence mise à jour est constituée par la valeur d'effort courante qui vient d'être mesurée, ce qui est rendu possible par le fait que cette valeur d'effort n'est de toute manière mise à jour que lorsque les écarts capacitifs mesurés sont inférieurs au seuil bas et que le clavier est par conséquent au repos. Cette disposition permet notamment de s'affranchir du problème du facteur de charge.

Dans un mode de réalisation particulier de l'invention, on calcule les écarts entre les valeurs capacitives mesurées et les valeurs capacitives de référence, le clavier possédant au moins un état de non sélection, un état de présélection et un état de sélection confirmée et les transitions d'un état à l'autre étant déterminées en comparant les écarts capacitifs à un seuil bas et à un seuil haut.

Plus particulièrement, une touche peut être présélectionnée lorsque son écart capacitif est supérieur au seuil bas, et une touche sélectionnée si elle est déjà présélectionnée et que son écart capacitif est supérieur au seuil haut.

Des mesures peuvent en outre être prises afin d'effectuer un tri entre plusieurs touches susceptibles d'être présélectionnées, de gérer les conflits, et de s'affranchir des effleurements du clavier.

Plus particulièrement, on peut, lorsque deux touches ont leur écart capacitif supérieur au seuil bas, ne présélectionner que la touche ayant l'écart capacitif le plus élevé.

En outre, lorsque le clavier est au repos ou qu'une touche est déjà présélectionnée, il reste ou retourne à l'état de non sélection si deux touches au moins ont un écart capacitif supérieur au seuil haut.

Enfin, lorsqu'une touche et une seule non présélectionnée présente un écart capacitif supérieur au seuil haut et s'il existe déjà une touche présélectionnée présentant un écart capacitif inférieur au seuil haut, alors la première touche est substituée à la deuxième et devient la touche présélectionnée.

Le seuil bas définit par conséquent la plage de variation du signal au repos dûe aux dérives diverses et aux bruits résiduels. Toute variation de signal supérieur à ce seuil est considérée comme résultant d'une action de l'opérateur sur le clavier.

Le seuil haut défini la sensibilité du clavier c'est-à-dire la variation de signal caractérisant une sélection. Le choix du seuil haut peut notamment être effectué en fonction du fait que le clavier est prévu pour être utilisé avec ou sans gant.

Plus particulièrement on peut déterminer l'état de validation du clavier dans la deuxième phase, lorsque le clavier est dans son état de présélection ou de sélection confirmée.

Egalement dans un mode de réalisation particulier de l'invention, on calcule l'écart entre la valeur d'effort mesurée et une valeur d'effort de référence, le clavier possédant au moins un état de non validation, un état de prévalidation et un état de validation confirmée et les transitions d'un état à l'autre étant déterminées en comparant l'écart d'effort à un seuil prédéterminé.

On peut notamment prévoir que le clavier est en état de prévalidation lorsque l'écart d'effort est supérieur au seuil depuis un nombre de cycles inférieur à un nombre prédéterminé, et en état de validation confirmée lorsque l'écart d'effort est supérieur au seuil depuis un nombre de cycles au moins égal à ce nombre.

Le choix du seuil haut définit la pression nécessaire à la prise en compte d'une validation, et celui du nombre de cycles de temporisation sur la validation définit la durée minimum d'une sélection.

On décrira maintenant à titre d'exemple non limitatif un mode de mise en oeuvre particulier du procédé selon l'invention en référence aux dessins schématiques annexés dans lesquels :

- la figure 1 est un diagramme d'ensemble des moyens permettant la mise en oeuvre de l'invention,

- la figure 2 est un organigramme du séquencement des traitements,

- la figure 3 représente les états et transitions de l'automate de sélection, et

- la figure 4 illustre les états et transitions de l'automate de validation.

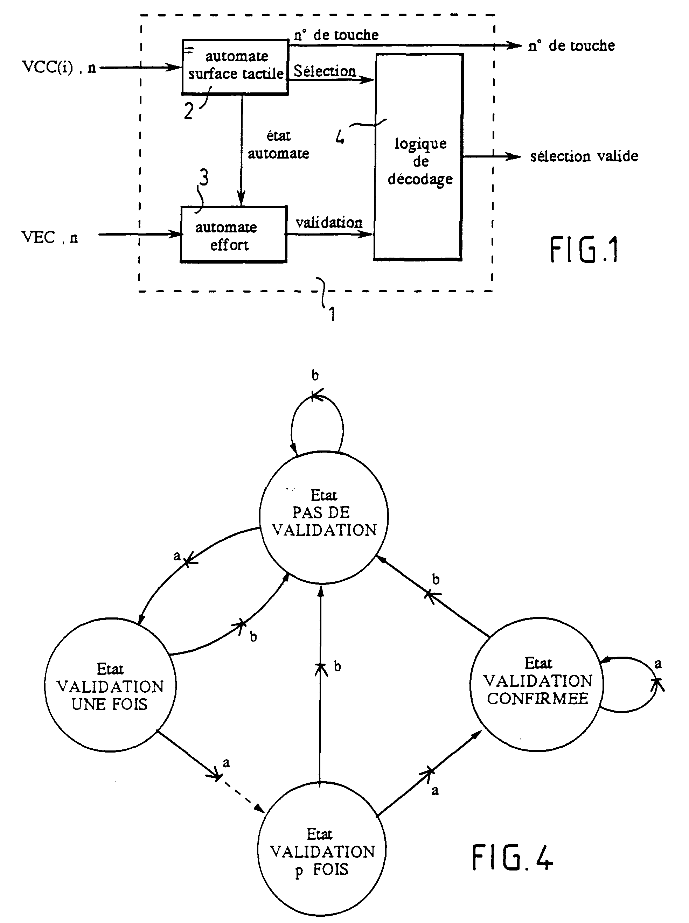

On voit sur la figure 1, un calculateur 1 susceptible de mettre en oeuvre le procédé selon l'invention.

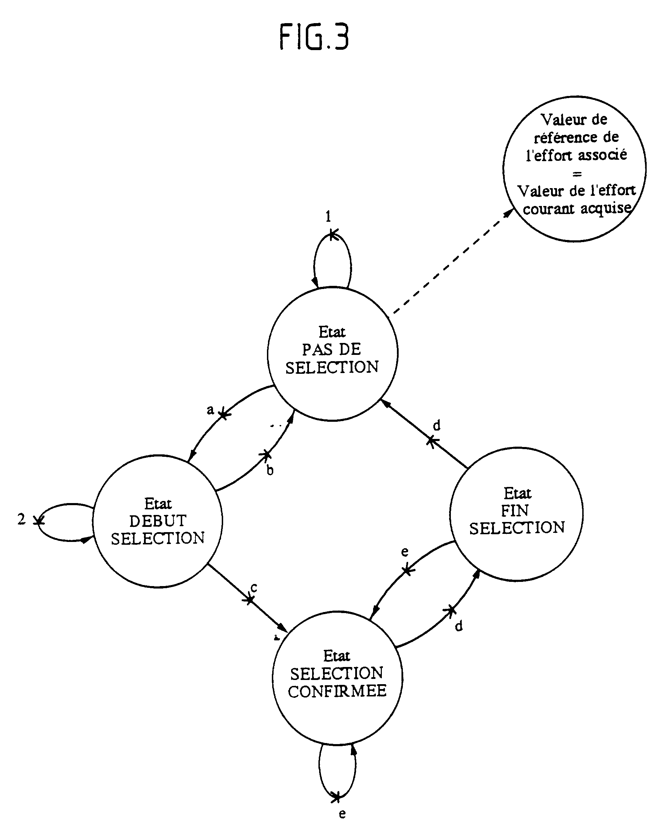

Ce calculateur est constitué d'un automate de sélection 2 associé à la surface tactile, d'un automate de validation 3 associé au dispositif de mesure d'effort, et d'une unité logique de décodage 4. La surface tactile et ses dispositifs de mesure de capacité et d'effort sont d'un type bien connu et ne seront par conséquent pas décrits plus en détail. Les automates 2 et 3 étant également de type connu, seul leurs diagrammes d'états et de transitions seront décrits en référence aux figures 3 et 4.

L'automate 2 reçoit en entrée à chaque cycle n les valeurs $VCC(i)$, n des valeurs capacitives des touches i mesurées au cours du cycle. Les sorties de l'automate 2 sont constituées par un entier positif représentant le numéro d'une touche éventuellement sélectionnée et un paramètre logique définissant l'état de cette touche.

L'automate 3 reçoit en entrée à chaque cycle n la valeur $VEC,n$ de l'effort mesuré à ce cycle. La sortie de cette automate est un paramètre logique définissant l'état de validation du clavier.

Les paramètres logiques d'état de sélection et d'état de validation sont appliqués en entrée de l'unité logique 4 de décodage qui fournit en sortie le paramètre logique de sélection valide.

La sortie du calculateur 1 est donc constituée du numéro de la touche éventuellement sélectionnée et du paramètre logique :

SELECTION VALIDE = SELECTION x VALIDATION

On remarquera en outre que l'état de l'automate 2 est fourni à l'automate 3. On verra en effet ci-après que l'automate 3 est un automate esclave de l'automate maître 2.

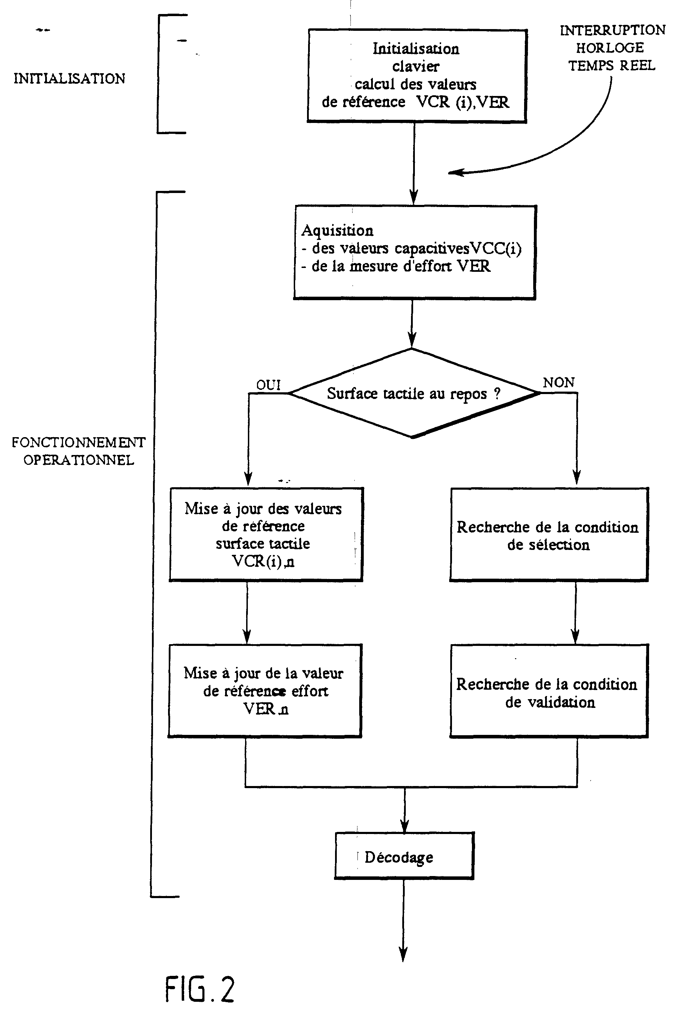

Si on se réfère maintenant à la figure 2, on voit que l'ensemble du procédé selon l'invention se décompose en deux étapes, à savoir une étape d'initialisation et une étape de fonctionnement opérationnel.

L'étape d'initialisation vise à s'affranchir des imprécisions résultant des tolérances sur le matériel. A cet effet, des valeurs capacitives de référence de chaque touche VCR(i) et une valeur d'effort de référence VER sont mesurées au cours de l'étape d'initialisation en l'absence de sollicitation du clavier et mémorisées. Ces valeurs constituent les valeurs de référence initiales pour la surface tactile et le dispositif de mesure d'effort.

L'étape de fonctionnement opérationnel est appelée par une interruption déclenchée par une horloge, par exemple toutes les 20 millisecondes.

Chacun des cycles débute par l'acquisition des valeurs capacitives VCC(i) et de la valeur d'effort VEC.

On détermine ensuite de la façon qui sera décrit ci-après si la surface tactile est au repos.

Dans ce cas on met à jour les valeurs capacitives de référence de la surface tactile VCR(i), n et la valeur de référence d'effort VER,n.

Dans le cas où la surface tactile n'est pas au repos, on recherche successivement la condition de sélection et la condition de validation. On met alors à jour uniquement les valeurs capacitives de référence des touches au repos.

Le cycle se termine enfin par le décodage décrit ci-dessus.

On décrira maintenant l'automate de sélection 2 en référence à la figure 3.

Cet automate permet d'intégrer les dérives lentes du signal issu de la surface tactile (dérive en température), de lisser le bruit résiduel, et de gérer les conflits (sélection simultanée de plusieurs touches).

A cet effet le programme calcule à chaque cycle n et pour chaque touche i un écart capacitif courant ECC(i),n tel que :

$$ECC(i),n = VCR(i),n - VCC(i),n$$

Si | ECC(i),n | < Seuil Bas, le clavier est au repos et on reste à l'état PAS DE SELECTION (figure 3).

La valeur capacitive courante de chaque touche est intégrée à la valeur capacitive de référence qui est ainsi remise à jour suivant la formule :

$$VCR(i),n = (a \times VCR(i),n-1 + VCC(i),n)/(a + 1)$$

Sinon, une phase de sélection débute et la logique de l'automate est mise en oeuvre.

La figure 3 représente les quatre états possibles de l'automate 2.

PAS DE SELECTION

DEBUT DE SELECTION
SELECTION CONFIRMEE
FIN DE SELECTION

Les transitions entre ces états sont les suivantes

Transition a : une touche i au moins parmi les touches du clavier vérifient au cycle n la condition :
ECC(i),n ≥ Seuil Bas ou ECC(i),n ≥ Seuil Haut
et il n'existe pas deux touches i et j telles que :
ECC(i),n ≥ Seuil Haut et ECC(j),n ≥ Seuil Haut

On présélectionne alors la touche I présentant l'écart supérieur.

Cette transition correspond au cas où la proximité (cas du seuil bas) ou la présence (cas du seuil haut) d'un doigt et détectée sur la surface tactile.

On contrôle lors de cette transition que la présélection est unique (gestion des conflits). Le filtrage est effectué sur le seuil haut de façon à ne pas rendre le système trop sensible.

Par conséquent, à l'issu de cette phase, une touche I et une seule est présélectionnée et l'automate passe dans l'état DEBUT DE SELECTION.

Transition 1 : cette transition correspond au cas où toutes les touches du clavier vérifient au cycle n la condition :

$$ECC(i),n < Seuil Bas$$

Comme on l'a vu précédemment, ce cas correspond où le clavier est et reste à l'état de repos, l'automate étant dans l'état PAS DE SELECTION. Les valeurs de référence sont réactualisées.

Transition b : cette transition se produit lorsque la touche préalablement présélectionnée I vérifie au cycle n la condition :
ECC(I),n < Seuil Bas et qu'aucune des autres touches du clavier ne vérifie la condition :
ECC(i),n ≥ Seuil Haut ou s'il existe deux touches i et j telles que
ECC(i), n ≥ Seuil Haut
et
ECC(j), n ≥ Seuil Haut

Dans le premier cas, la touche présélectionnée est retournée à l'état de repos ce qui est le cas par exemple après un effleurement de la surface tactile.

Aucune autre touche n'est sélectionnée et l'automate revient dans l'état PAS DE SELECTION.

Dans le deuxième cas, il y a conflit et l'automate revient dans l'état PAS DE SELECTION.

Transition c : il s'agit de la transition correspondant au cas où la touche présélectionnée I vérifie au cycle n la condition :
ECC(I),n ≥ Seuil Haut

La touche I est alors sélectionnée.

Dans ce cas la présence du doigt est confirmée sur la touche I de la surface tactile. L'automate passe dans l'état SELECTION CONFIRMEE.

Transition 2 : Si la touche présélectionnée I vérifie au cycle n la condition :

Seuil Bas $\leq$ ECC(I),n < Seuil Haut

la touche I reste la touche présélectionnée. Ce cas est celui où le doigt de l'opérateur reste à proximité de la touche. L'influence du doigt sur la touche n'est toutefois pas suffisante pour confirmer la sélection.

La même transition se produit si la touche présélectionnée I vérifie au cycle n la condition :

ECC(I),n < Seuil Haut

et si parmi les autres touches du clavier une et une seule vérifie la condition :

ECC(i),n $\geq$ Seuil Haut

La touche i devient la touche présélectionnée.

Ce cas se produit lorsque la présence d'un doigt est détecté sur une touche autre que la touche présélectionnée. Cette autre touche devient prioritaire mais l'automate reste dans l'état DEBUT DE SELECTION. On s'affranchit ainsi des perturbations de signal dûes à la proximité des autres doigts lors d'une sélection sur le clavier.

Transition d : cette transition se produit lorsque la touche I sélectionnée vérifie au cycle n la condition :

ECC(I),n < Seuil Bas

Le clavier retourne alors à l'état de repos lorsqu'il y a relâchement de la touche (l'automate est dans l'état FIN DE SELECTION) puis confirmation du relâchement (l'automate est dans l'état PAS DE SELECTION).

Transition e : il s'agit du cas où la touche I sélectionnée vérifie au cycle n la condition :

ECC(I),n $\geq$ Seuil Bas

il n'y a alors pas confirmation de relâchement et l'automate revient dans l'état SELECTION CONFIRMEE.

On constate par conséquent que dans le fonctionnement de cet automate, trois grandeurs sont paramètrables, à savoir le seuil bas, le seuil haut et le coefficient "a" intervenant dans la formule de mise à jour des valeurs capacitives de référence.

On décrira maintenant en référence à la figure 4 l'automate 3 de validation.

Cet automate assure l'insensibilité aux fluctuations du signal induites par le facteur de charge, à l'hystérésis présenté par les corps d'épreuve et avec dérives diverses, et permet un filtrage par la confirmation sur plusieurs cycles de la validation.

L'automate 3 de validation est esclave de l'automate 2 de sélection. Tant que l'automate de sélection est dans l'état PAS DE SELECTION, la valeur de référence de l'effort au cycle n devient la valeur courante de l'effort à ce cycle :

VER,n = VEC,n

Dans le cas contraire, la valeur de référence est figée :

VER,n = VER, n-1 et le programme calcule un écart courant ECE,n tel que :

ECE,n = VEC,n-VER,n

la logique de l'automate est alors mise en oeuvre.

On constate sur la figure 4 que le nombre d'état de l'automate 3 dépend directement de l'importance du filtrage du fait de l'existence des états VALIDATION UNE FOIS, VALIDATION DEUX FOIS,... VALIDATION p FOIS.

Les transitions de cet automate sont les suivantes

Transition a : cette transition se produit lorsqu'au cycle n la condition suivante est vérifiée :

ECE,n $\geq$ Seuil

Cette transition correspond au cas où l'appui exercé par l'opérateur sur la surface tactile est suffisamment important pour correspondre à une validation de sélection. L'automate passe alors dans l'état de VALIDATION.

Transition b : il s'agit du cas où au cycle n la condition suivante est vérifiée :

ECE,n < Seuil

ce cas est celui où l'opérateur a relaché son appui ou n'appuie pas suffisamment pour déclencher la validation. L'automate revient alors dans l'état PAS DE VALIDATION.

On constate par conséquent que dans l'automate de validation, le seuil et le nombre d'états VALIDATION sont paramètrables.

## Revendications

1.  Procédé d'exploitation d'un clavier tactile capacitif, dans lequel on détermine cycliquement la position du doigt de l'opérateur sur le clavier et la pression exercée par ce doigt par des mesures de capacité et des mesures d'effort, caractérisé par le fait que :

    -   dans une première phase de chaque cycle, on mesure la valeur capacitive de chaque touche du clavier et on détermine à partir de ces mesures un état de sélection du clavier,

    -   dans une deuxième phase du cycle, et pour seulement certains états de sélection du clavier, on prend en compte les mesures d'effort pour déterminer un état de validation du clavier, et

    -   on décide qu'une sélection valide a eu lieu en fonction de l'état de sélection et de l'état de validation du clavier.

2.  Procédé selon la revendication 1, dans lequel on compare chaque valeur capacitive mesurée à une valeur capacitive de référence et, lorsque l'écart capacitif d'une touche est inférieur à un seuil bas prédéterminé, on met à jour la valeur capacitive de référence correspondante.

**3.** Procédé selon la revendication 2, dans lequel les valeurs capacitives de référence mises à jour sont obtenues par calcul d'une moyenne pondérée à partir d'au moins la moyenne précédemment calculée et de la valeur capacitive mesurée.

**4.** Procédé selon l'une quelconque des revendications 1 à 3, dans lequel on compare chaque valeur capacitive mesurée à une valeur capacitive de référence, et, lorsque les écarts capacitifs de toutes les touches sont inférieurs à un seuil bas prédéterminé, on met à jour une valeur de référence d'effort.

**5.** Procédé selon la revendication 4, dans lequel la valeur d'effort de référence mise à jour est la dernière valeur d'effort mesurée.

**6.** Procédé selon l'une quelconque des revendications 1 à 4, dans lequel on calcule les écarts entre les valeurs capacitives mesurées et des valeurs capacitives de référence, le clavier possédant au moins un état de non sélection, un état de présélection et un état de sélection confirmée, et les transitions d'un état à l'autre étant déterminées en comparant les écarts capacitifs à un seuil bas et à un seuil haut.

**7.** Procédé selon la revendication 6, dans lequel une touche est présélectionnée lorsque son écart capacitif est supérieur au seuil bas, et une touche est sélectionnée si elle est déjà présélectionnée et son écart capacitif est supérieur au seuil haut.

**8.** Procédé selon l'une quelconque des revendications 6 et 7 dans lequel, lorsque deux touches ont leur écart capacitif supérieur au seuil bas, seule la touche présentant l'écart capacitif le plus élevé est présélectionnée.

**9.** Procédé selon l'une quelconque des revendications 6 à 8, dans lequel le clavier est mis dans son état de non sélection lorsque l'écart capacitif d'au moins deux touches est supérieur au seuil haut.

**10.** Procédé selon l'une quelconque des revendications 6 à 9, dans lequel une touche est présélectionnée lorsque son écart capacitif est supérieur au seuil haut et qu'une autre touche est présélectionnée, cette dernière retournant à son état de non sélection.

**11.** Procédé selon l'une quelconque des revendications 6 à 10, dans lequel on détermine l'état de validation du clavier dans la deuxième phase, lorsque le clavier est dans son état de présélection ou de sélection confirmée.

**12.** Procédé selon l'une quelconque des revendications 1 à 11, dans lequel on calcule l'écart entre la valeur d'effort mesurée et une valeur d'effort de référence, le clavier possédant au moins un état de non validation, un état de prévalidation et un état de validation confirmée, et les transitions d'un état à l'autre étant déterminées en comparant l'écart d'effort à un seuil prédéterminé.

**13.** Procédé selon la revendication 12, dans lequel le clavier est en état de prévalidation lorsque l'écart d'effort est supérieur au seuil depuis un nombre de cycles inférieur à un nombre prédéterminé, et en état de validation confirmée lorsque l'écart d'effort est supérieur au seuil depuis un nombre de cycles au moins égal à ce nombre.

**Patentansprüche**

**1.** Verfahren zum Betrieb einer kapazitiven Tast-Tastatur, in der man zyklisch die Position des Fingers des Operators auf der Tastatur und den von diesem Finger durch Kapazitätsmessungen und Beanspruchungsmessungen ausgeübten Druck bestimmt, **dadurch gekennzeichnet**, daß:

- man in einer ersten Phase jedes Zyklusses den kapazitiven Wert jeder Taste der Tastatur mißt und man ausgehend von diesen Messungen einen Auswahlzustand der Tastatur bestimmt,

- man in einer zweiten Phase des Zyklusses, und nur für bestimmte Auswahlzustände der Tastatur, die Beanspruchungsmessungen zur Bestimmung eines Bestätigungszustandes der Tastatur berücksichtigt und

- man entscheidet, daß eine gültige Auswahl in Abhängigkeit des Auswahlzustandes und des Bestätigungszustandes der Tastatur stattgefunden hat.

**2.** Verfahren gemäß Anspruch 1, in dem man jeden gemessenen kapazitiven Wert mit einem kapazitiven Referenzwert vergleicht und, wenn die kapazitive Abweichung einer Taste unterhalb eines vorbestimmten niedrigen Grenzwertes liegt, aktualisiert man den entsprechenden kapazitiven Referenzwert.

**3.** Verfahren gemäß Anspruch 2, in dem die aktualisierten kapazitiven Referenzwerte durch Berechnung eines gewichteten Durchschnitts erhalten werden, ausgehend von wenigstens dem zuvor berechneten Durchschnitt und dem gemessenen kapazitiven Wert.

**4.** Verfahren gemäß Anspruch 1 bis 3, in dem man jeden gemessenen kapazitiven Wert mit einem kapazitiven Referenzwert vergleicht und, wenn die kapazitiven Abweichungen aller Tasten unterhalb eines vorbestimmten niedrigen Grenzwerts liegen, aktualisiert man einen Beanspruchungsreferenzwert.

5.  Verfahren gemäß Anspruch 4, in dem der aktualisierte Referenzbeanspruchungswert der letzte gemessene Beanspruchungswert ist.

6.  Verfahren gemäß Anspruch 1 bis 4, in dem man die Abweichungen zwischen den gemessenen kapazitiven Werten und den kapazitiven Referenzwerten berechnet, wobei die Tastatur wenigstens einen Nicht-Auswahlzustand, einen Zustand der Vorwahl und einen Zustand der bestätigten Auswahl besitzt, und die Übergänge von einem Zustand in den anderen durch Vergleich der kapazitiven Abweichungen von einem niedrigen Grenzwert und einem hohen Grenzwert bestimmt werden.

7.  Verfahren gemäß Anspruch 6, in dem eine Taste vorgewählt wird, wenn ihre kapazitive Abweichung oberhalb des niedrigen Grenzwertes liegt und eine Taste ausgewählt wird, wenn sie bereits vorgewählt und ihre kapazitive Abweichung oberhalb des hohen Grenzwertes liegt.

8.  Verfahren gemäß Anspruch 6 und 7, in dem nur die Taste vorgewählt wird, die die höchste kapazitive Abweichung aufweist, wenn die kapazitive Abweichung zweier Tasten oberhalb des unteren Grenzwertes liegt.

9.  Verfahren gemäß Anspruch 6 bis 8, in dem die Tastatur in ihren Nicht-Auswahlzustand gebracht wird, wenn die kapazitive Abweichung von wenigstens zwei Tasten oberhalb des oberen Grenzwertes liegt.

10. Verfahren gemäß Anspruch 6 bis 9, in dem eine Taste vorgewählt wird, wenn ihre kapazitive Abweichung oberhalb des oberen Grenzwertes liegt und eine andere Taste vorgewählt ist, wobei diese letztere in ihren Nicht-Auswahlzustand zurückkehrt.

11. Verfahren gemäß Anspruch 6 bis 10, in dem man den Bestätigungszustand der Tastatur in der zweiten Phase bestimmt, wenn die Tastatur in ihrem Zustand der Vorwahl oder in der bestätigten Auswahl ist.

12. Verfahren gemäß Anspruch 1 bis 11, in dem man die Abweichung zwischen dem gemessenen Beanspruchungswert und einem Referenzbeanspruchungswert berechnet, wobei die Tastatur wenigstens einen Nicht-Bestätigungszustand, einen Vorbestätigungszustand und einen bestätigten Bestätigungszustand besitzt und die Übergänge von einem Zustand zum anderen durch Vergleich der Beanspruchungs-abweichung mit einem vorbestimmten Grenzwert bestimmt werden.

13. Verfahren gemäß Anspruch 12, in dem die Tastatur im Vorbestätigungszustand ist, wenn die Beanspruchungs-abweichung ausgehend von einer unterhalb einer vorbestimmten Anzahl liegenden Anzahl Zyklen oberhalb des Grenzwertes liegt und sich im bestätigten Bestätigungszustand befindet, wenn die Beanspruchungsabweichung oberhalb des Grenzwertes ausgehend von einer Anzahl von Zyklen liegt, die wenigstens gleich dieser Anzahl ist.

**Claims**

1.  A method of using a capacitive touch keyboard, in which the position of the finger of the operator on the keyboard and the pressure exerted by this finger are determined cyclically by measurements of capacitance and measurements of force, characterised by the fact that:

    - in a first phase of each cycle, the capacitive value of each key on the keyboard is measured and, from these measurements, a state of selection of the keyboard is determined,

    - in a second phase of the cycle, and for only certain states of selection of the keyboard, the force measurements are taken into account in order to determine a state of validation of the keyboard, and

    - it is decided that a valid selection has taken place according to the state of selection and the state of validation of the keyboard.

2.  A method according to Claim 1, in which each capacitive value measured is compared with a reference capacitive value and, when the capacitive difference of a key is less than a predetermined low threshold, the corresponding reference capacitive value is updated.

3.  A method according to Claim 2, in which the updated reference capacitive values are obtained by calculating a weighted average from at least the previously calculated average and the measured capacitive value.

4.  A method according to any one of Claims 1 to 3, in which each measured capacitive value is compared with a reference capacitive value and, when the capacitive differences of all the keys are below a predetermined low threshold, a reference force value is updated.

5. A method according to Claim 4, in which the updated reference force value is the last force value measured.

6. A method according to any one of Claims 1 to 4, in which the differences between the measured capacitive values and the reference capacitive values are calculated, the keyboard having at least one state of non-selection, a state of preselection and a state of confirmed selection, and the transitions from one state to another being determined by comparing the capacitive differences with a low threshold and a high threshold.

7. A method according to Claim 6, in which a key is preselected when its capacitive difference is higher than the low threshold, and a key is selected if it is already preselected and its capacitive difference is higher than the high threshold.

8. A method according to either one of Claims 6 and 7 in which, when two keys have their capacitive difference higher than the low threshold, only the key having the highest capacitive difference is preselected.

9. A method according to any one of Claims 6 to 8, in which the keyboard is put in its state of non-selection when the capacitive difference of at least two keys is higher than the high threshold.

10. A method according to any one of Claims 6 to 9, in which a key is preselected when its capacitive difference is higher than the high threshold and another key is preselected, the latter returning to its state of non-selection.

11. A method according to any one of Claims 6 to 10, in which the state of validation of the keyboard is determined in the second phase, when the keyboard is in its state of preselection or confirmed selection.

12. A method according to any one of Claims 1 to 11, in which the differences between the measured force value and a reference force value is calculated, the keyboard having at least one state of non-validation, a state of prevalidation and a state of confirmed validation, and the transitions from one state to another being determined by comparing the force difference with a predetermined threshold.

13. A method according to Claim 12, in which the keyboard is in a state of prevalidation when the force difference has been higher than the threshold for a number of cycles less than a predetermined number, and in a state of confirmed validation when the force difference has been higher than the threshold for a number of cycles at least equal to this number.

FIG.1

FIG.4

EP 0 567 364 B1

INITIALISATION

INTERRUPTION
HORLOGE
TEMPS REEL

Initialisation
clavier
calcul des valeurs
de référence VCR (i),VER

Aquisition
- des valeurs capacitivesVCC(i)
- de la mesure d'effort VER

OUI ← Surface tactile au repos ? → NON

FONCTIONNEMENT
OPERATIONNEL

Mise à jour des valeurs
de référence
surface tactile
VCR(i),n

Recherche de la condition
de sélection

Mise à jour de la valeur
de référence effort
VER.n

Recherche de la condition
de validation

Décodage

FIG.2

10

# FIG.3

Valeur de référence de l'effort associé = Valeur de l'effort courant acquise

1

Etat
PAS DE
SELECTION

a

b

d

2

Etat
DEBUT
SELECTION

Etat
FIN
SELECTION

c

e

d

Etat
SELECTION
CONFIRMEE

e